# EUROPEAN PATENT SPECIFICATION

(11) **EP 3 591 487 B1**
(45) Date of publication and mention of the grant of the patent: **26.05.2021**
(21) Application number: 18181188.6
(22) Date of filing: 02.07.2018
(51) Int. Cl.: G05D 1/02, G05B 19/418, G06Q 10/08

(54) **AN AGV SYSTEM AND A METHOD OF CONTROLLING AN AGV SYSTEM**
FTS-SYSTEM UND VERFAHREN ZUR STEUERUNG EINES FTS-SYSTEMS
SYSTÈME DE VÉHICULE À GUIDAGE AUTOMATIQUE ET PROCÉDÉ DE COMMANDE D'UN SYSTÈME DE VÉHICULE À GUIDAGE AUTOMATIQUE

(43) Date of publication of application: 08.01.2020
(73) Proprietor: Kollmorgen Automation AB, 431 90 Mölndal (SE)
(72) Inventor: Bijelovic, Milica, 411 01 Göteborg (SE)
(74) Representative: AWA Sweden AB

(56) References cited:
- WO-A2-2007/149227
- US-A1- 2015 227 140

## Description

### Technical field

The present invention relates to an AGV system comprising a plurality of AGVs and a workspace in which said plurality of AGVs operate. The present invention also relates to a method of controlling an AGV system.

### Background art

Automatic guided vehicles (AGV) are used in a number of application areas today, such as factories, warehouses and hospitals. Different AGV systems use different navigation methods and commonly used ones today are reflectors arranged on walls in combination with lasers, or magnets arranged in the floor.

In a system including several AGVs, a software system is normally used for setting up traffic rules to control the movements of the AGVs and allow them to move without colliding with each other. Understandably, if a large number of AGVs are included in an AGV system, the calculations in the software system become more complex and heavier, and the efficiency of the system becomes reduced if the AGVs are directed along inferior routes.

WO 2007/149227 discloses a method and system for management of mobile units within an inventory system. Here, an assignment state of a mobile unit is determined, and a location for the mobile drive unit is selected based on the assignment state, when the mobile drive unit is not currently completing a task. Before beginning on a particular segment, the mobile drive unit may request permission to use the segment, and the state of the mobile drive unit may dictate the cells which through which the mobile drive unit can travel. A segment reservation module may reserve a particular segment by taking appropriate steps to ensure that only mobile drive units moving in the same direction may reserve the relevant segment.

A particular set-up that is often purposely avoided when designing a workspace are alleys, such as blind alleys or tunnels. In a workspace, an alley is a narrow path in which, widthwise, only one AGV can be present (several AGVs may move in the same direction lengthwise, one after another in the alley). In other words, if a first AGV is already present in such an alley, a second AGV is only allowed to pass the first AGV if the first AGV moves out of the way, i.e. away from the alley. If a workspace designer nevertheless provide alleys in the workspace, then for an alley in the form of a tunnel, i.e. having an entrance and an exit, rules are normally created to only allow movemement in one direction of the alley, i.e. one dedicated entrance and one dedicated exit. However, with a large number of AGVs present, for example 10 or more, and having planned routes into the tunnel, the calculations may still become very heavy. In case the alley is designed as a blind alley, the calculations necessary to avoid collision when several AGVs are heading for the blind alley, would be extremely complex and difficult to process. The number of calculations needed is exponentially dependent on the number of AGVs, as for each AGV, all the other AGVs need to be taken into account. Actually, the exponent is a factorial, thus running the risk of leading to what is commonly referred to as a "computational explosion".

### Summary of the Invention

An object of the present invention is to alleviate the drawbacks of the prior art. In particular an object of the invention is to provide an AGV system which can handle a workspace having an alley better than the prior art. These and other objects, which will become apparent in the following, are accomplished by an AGV system as defined in the appended independent claim.

The present invention is based on the realization by the inventor that rather than making advanced and complex calculations in advance for a large number of AGVs in connection with an alley, it would be more efficient to solve a conflict when it arises. In particular, the inventor has realized that calculations with respect to an alley can be postponed for each individual AGV until an AGV is about to enter an alley. At that point in time, calculations are made, based on the presence of any other AGV(s) in the alley, and a decision is made whether the AGV outside the alley may enter or must wait until the situation in the alley is different.

In particular, a system is provided in which an entrance/exit node is assigned to each entrance of an alley. Thus, in the case of a blind alley having only one entrance, there will be one entrance/exit node. In the case of a tunnel having two possible entrances, there will be two entrance/exit node, one for each entrance.

It should be understood that an entrance may also be used by AGVs to exit the alley, just like people can use an entrance to a shop, both for going into the shop and going out from the shop.

According to a first aspect of the invention an AGV system is provided. The AGV system comprises
- a plurality of AGVs (Automatic Guided Vehicles), wherein each AGV has a first state in which it carries a load (such as a rack, or any other type of inventory holder or even an inventory item), and a second state in which it is free from carrying a load,
- a workspace, such as a warehouse, in which said plurality of AGVs operate, the workspace comprising at least one alley in which any two of said plurality of AGVs are not allowed to pass each other, wherein said alley has one or two entrances for any AGV travelling in said workspace while being in its first state and having a planned route into said alley,
- a central control unit having access to a stored representation of the workspace, wherein in the stored representation of the workspace an entrance/exit node is located immediately outside a respective entrance, wherein the central control unit is configured to plan the routes of and communicating with said plurality of AGVs, wherein the control unit monitors the position and state (and suitably the trajectory and/or route) of any one of said plurality of AGVs that is present in the alley,
   wherein before an AGV (may be referred to as a first AGV), which is located externally of the alley and has a planned route into said alley, is allowed to occupy a portion of the workspace that corresponds to one of said entrance/exit nodes in the stored representation of the workspace, the control unit is configured to determine
- if said first AGV is in its first or second state, and
- if any other AGV is present in the alley and would interfere with said planned route of said first AGV,
wherein the control unit is configured to direct said first AGV into the alley via said portion of the workspace (which corresponds to the entrance/exit node of the representation of the workspace) upon determination by the control unit that there would be no interference with the planned route.

A workspace may comprise a single alley or a plurality of alleys. In case of a plurality of alleys they may be separate from one another or forming junctions with one another. Some workspaces may have one or more separate alleys and also a number of alleys that meet each other at one or more junctions. In each of the above examples of workspace alternatives, the alleys may be in the form of tunnels or blind alleys or a combination of both (i.e. some alleys of the workspace being tunnels and some being blind alleys). It should be noted that although a tunnel is normally considered to have two entrances, while a blind alley only has one entrance, there is a particular layout in which an alley has the function of a tunnel but with only one entrance. This is the case when the alley is like a roundabout having only one entrance, thus allowing an AGV to enter through the entrance and travel a complete lap and then exit through the same entrance (presumably loading or unloading during said lap). Thus, in the stored representation of the workspace, this type of tunnel will be associated with only one entrance/exit node.

An alley may be defined by loading/unloading positions in the workspace which are assigned or reserved for keeping a load (inventory items or inventory holders such as racks, etc.). Such loading/unloading positions of the workspace may in some instances be occupied by a load, but in other instances some of them may be empty (e.g. if a rack has temporarily been removed). Regardless of if the loading/unloading positions are occupied by a load or not, in the stored representation of the workspace those positions define boundaries of the alley. Thus, an alley is not necessarily straight, it could e.g. be curved. However, it is also conceivable that an alley is defined by other structures in the workspace, e.g. fixed structures, such as walls or other obstacles. A combination of loading/unloading position and other structures for defining an alley is also conceivable.

As has been explained above, for an AGV being in its first state (i.e. carrying a load), there is only one entrance into a blind alley, and thus only one entrance/exit node (N.B. if the blind alley is defined by fixed structures of the type underneath which AGVs cannot travel even without carrying a load, then there is only one entrance into the blind alley regardless of the AGVs being in the first or second state). In the case of an alley referred to as a tunnel, there are two entrances for an AGV in its first state, heading towards the alley, wherein to each one of the two entrances there is assigned a respective entrance/exit node in the stored representation of the workspace.

An alley cannot have more than two entrance/exit nodes assigned to it. For instance, a plus-shaped crossing will in the stored representation of the workspace be treated as four alleys extending from a common junction. At said junction each one of the four alleys will have its own assigned entrance/exit node. Unless any one of the four alleys is a blind alley, then each alley will also have an entrance/exit node at the other end of the respective alley. Similarly, a T-shaped crossing, will be considered as three alleys extending from a common junction, where each one of the three alleys has its own assigned entrance/exit node at said common junction. Thus, although the entrance/exit nodes will share the coordinates (the junction), such as X-Y-coordinates of the workspace, they control the inflow/outflow/freelow of the respective alley. In contrast an L-shaped or otherwise irregular shaped alley which does not have a crossing, would be regarded as only one alley having two ends, and thus having one (in case of a blind alley) or two entrance/exit nodes (in case of a tunnel). In addition, there is also the above-mentioned case of an alley being formed as a roundabout with only one entrance/exit node, which in practice will function as a tunnel rather than a blind alley, since the entrance can be reached from two directions in the roundabout.

An AGV which is in its second state (i.e. without carrying a load) does not necessarily need to enter the alley via said entrances. The control unit may for instance move such an AGV into the alley by directing it underneath a rack that occupies one of the loading/unloading positions defining the alley. Similarly, an AGV being in its second state and being present in the alley, may be directed to move out of the way in favour of another AGV, for instance by moving laterally out from the alley and into one of said loading/unloading positions (for instance idling underneath a rack).

Placing the entrance/exit node immediately outside the respective entrance can be regarded as a last check-point before allowing the AGVs to enter the alley. In terms of discrete time steps, which will be explained further below, the entrance/exit node will be located one discrete time step from the alley.

The stored representation of the workspace may be stored in the central control unit itself, or in a separate unit from which the central control unit retrieves information. The central control unit may, for example, be a computer comprising a data storage unit in the form of a hard disk or in the form of an internal memory. In other example embodiments, said data storage unit and said control unit are separate units.

The AGV system may include any suitable position determining means for determining the position of each AGV in the system, based on which the central control unit may plan and control the movements of the AGVs. Some examples of conceivable position determining means may be in the form of reflectors arranged on walls, used in combination with laser scanners arranged on each one of said AGVs. In other example embodiments, said position determining means may be in the form of laser scanners arranged on each one of said AGVs, wherein said laser scanners use the environment, such as walls, to navigate. Alternatively, said position determining means may be using magnets in the floor for determining where said AGVs are located.

The AGV system may include any suitable communication means. Said communication means may enable communication between said central control unit and said AGVs, and/or said central control unit and said position determining means, and/or said central control unit and said data storage means. Said communication means may for example be a WLAN system.

Each AGV may have a docking unit for docking with a load (such as a rack or other inventory holder). The docking unit may have a sensor to confirm successful docking, i.e. that the AGV now carries a load. This may be communicated to the central control unit which assigns that AGV as being in its first state. Of course, any other suitable means for identifying if the AGV is in the first or second state may be used.

According to at least one example embodiment, said stored representation of the workspace is divided into discrete portions, wherein a planned route travelled by any one of said plurality of AGVs is represented by the AGV passing from a discrete portion currently occupied by the AGV to the next discrete portion along the planned route, and repeatingly passing to the following discrete portion along the planned route until the end of the planned route has been reached, wherein said entrance/exit node is located at the last discrete portion that an AGV being in its first state occupies before moving to a discrete portion inside the alley.

Although, the workspace in reality is not necessarily visibly divided into discrete portions, the stored representation may suitably have such a division of portions to enable better control and operation of the AGVs. Accordingly, the workspace may be considered to have virtual discrete portions. Furthermore, the real AGVs will, of course, not travel on the discrete portions in the stored representation of the workspace, but representations of the real AGVs may move along the stored representation of the workspace. Such movements would be true representations of the movements of the real AGVs in the real workspace along the virtual discrete portions.

The discrete portions may be provided by, for instance, a grid, wherein each square in the grid may be a discrete portion. Other ways of dividing the workspace into virtual discrete portions (i.e. dividing the stored representation of the workspace into discrete portions) may be achieved by segments or dots or combination thereof. The lengths, widths and shapes of the discrete portions may vary, or they may all have the same length, width and/or shape.

According to at least one example embodiment, before any one of said plurality of AGVs performs a movement from the discrete portion currently occupied by that AGV to the next discrete portion along the planned route, the central control unit determines if that AGV is allowed to make that movement.

In particular, before a first AGV moves from a discrete portion adjacent to the discrete portion having an entrance/exit node, the central control unit will determine if the first AGV is in its first position and if its planned route is into the alley. If this is the case, and a second AGV is in the alley, then depending on the state of the second AGV, the central control unit may determine whether or not to let the first AGV occupy the entrance/exit node. For instance, if the second AGV is in its second state (not carrying a load), the central control unit may in some instances, at least temporarily, direct it out of the way by, for instance, commanding tha second AGV to idle underneath an inventory holder laterally of the alley. If the second AGV is in its first state, the first AGV may still be allowed to occupy the entrance/exit node, for instance if the alley is a tunnel and therefore the second AGV is commanded to exit through the other entrance/exit node. However, if the second AGV is directed to exit through the same entrance/exit node as the one the first AGV awaits to occupy, then the central control unit will not allow the first AGV to move frome its current discrete portion to occupy the discrete portion associated with the entrance/exit node.

In at least some example embodiments the central control unit controls the AGVs in discrete time steps. It should be noted that the word "time" in the expression "discrete time steps" does not imply that each discrete time step has a fixed duration, such as a fixed number of seconds. Rather it implies that the discrete time steps are executed one after the other. Thus, as time goes by, a plurality of time steps will be executed. For instance, in the above example of a first and second AGV, a discrete time step can be to maintain the first AGV still at the current discrete portion. The next discret time step may be, move the second AGV from one discrete portion to the next discrete portion. When discrete time steps have been executed for all the AGVs, and the turn has again come to the deciding on the movement of the first AGV, then the control unit will again determine if the discrete time step for first AGV should be to move to the entrance/exit node, or once again stay still.

The order in which the discrete time steps are executed may be based on an order of priority of the AGVs. Thus, a discrete time step may first be executed for the highest a highest ranking AGV, and then for the second highest AGV, etc. until a discrete time step for a lowest ranking AGV is executed, and then continue once again with the highest ranking AGV. In some example embodiments, an the central control unit may change the order of priority. For instance a lower ranking AGV which has just collected and delivered an item which was not urgent do deliver, may subsequently become higher ranked by the central control unit if the next item to be delivered is of greater urgency. Thus, according to at least one example embodiment, the central control unit assigns a respective order of priority to each one of said plurality of AGVs, wherein said central control unit determines if an AGV having a higher order of priority is allowed to move before it determines if an AGV having a lower order of priority is allowed to move.

As previously explained above a plurality of alleys, such as three or four may extend from a common juction. This is reflected in the invention, according to which said at least one alley includes at least three alleys which are interconnected at a junction, wherein each one of said at least three alleys is assigned to a respective individual entrance/exit node, wherein in the stored representation of the workspace each one of said individual entrance/exit nodes is located in said junction.

Furthermore, according to at least one example embodiment, each one of said individual entrance/exit nodes is provided at a first end of a respective one of said at least three alleys, wherein each one of said at least three alleys have a second end, wherein a respective further entrance/exit node is located at each one of said second ends.

Moreover, according to the invention, said central control unit is configured to assign each one of said at least three alleys to one of three states, and to update the state of each one of said at least three alleys over time, wherein the three states are Inflow, Outflow and Freeflow, wherein for
Inflow, the central control unit allows AGVs to enter, but not exit, via the junction into the alley;
Outflow, the central control unit allows AGVs to exit, but not enter, via the junction,
Freeflow, if there is no AGV in the alley and the alley is not assigned to any of the other two states.

The central control unit may assign an alley to one of said three states, by setting the associated entrance/exit node (or nodes, in case of a tunnel) in the stored representation of the workspace with a corresponding Inflow, Outflow or Freeflow flag.

According to at least one example embodiment, said junction is shared by N number of alleys, wherein if N-1 number of said alleys are assigned the state Outflow, then the remaining alley is assigned the state Inflow with respect to said junction. This may be regarded as a safety measure to avoid a collision situation in which AGVs from all the alleys travel to the common junction. Thus, according to this example embodiment, in case of a junction there will always be at least one exit from the combination of alleys, i.e. at least one of the alleys will have the state Inflow by setting an entrance/exit node to allow AGVs to move from said common junction into that alley.

According to at least one example embodiment, if two or more of said plurality of AGVs are to be directed into said at least one alley, or into one of said at least three alleys sharing a common junction, then if both or all of said two or more AGVs are one discrete portion from entering an alley, the central control unit directs the AGV that has the highest order of priority into the alley first. In other words, if discrete time steps are used, and a first and a second AGV are both one discrete time step from entering an alley or accessing an entrance/exit node, then the AGV having the highest priority will be allowed to move first. However, if the first AGV is two discrete time steps from entering the alley, while the second AGV is only one discrete time step from entering then alley, then the central control unit may suitably be configured to control the second AGV to move into the alley regardless of it having the highest or lowest priority of the first and second AGVs.

According to a second aspect of the invention, there is provided a method of controlling an AGV system, which system comprises a plurality of AGVs which operate in a workspace, such as a warehouse, the workspace comprising at least one alley in which any two of said plurality of AGVs are not allowed to pass each other, wherein said alley has one or two entrances for any AGV travelling in said workspace while carrying a load and having a planned route into said alley. The method comprises:
assigning any AGV which carries a load as being in a first state, and assigning any AGV which is free from carrying a load as being in a second state,
providing a representation of a workspace,
storing the representation of the workspace in a central control unit or a separate unit to which the central control unit has access,
providing in the stored representation an entrance/exit node located immediately outside a respective entrance,
planning the routes of and communicating with said plurality of AGVs by means of the central control unit,
monitoring, by means of the central control unit, the position and state of any one of said plurality of AGVs that is present in the alley,
determining, before a first AGV, which is located externally of the alley and has a planned route into said alley, is allowed to occupy a portion of the workspace that corresponds to one of said entrance/exit nodes in the stored representation of the workspace, by means of the central control unit
   - if said first AGV is in its first or second state, and
   - if any other AGV is present in the alley and would interfere with said planned route of said first AGV,
      directing, by means of said central control unit, said first AGV into the alley via said portion of the workspace upon determination that there would be no interference with the planned route;
   wherein said at least one alley includes at least three alleys which are interconnected at a junction, wherein each one of said at least three alleys is assigned to a respective individual entrance/exit node,
   wherein in the stored representation of the workspace each one of said individual entrance/exit nodes is located in said junction,
   characterized in that said central control unit is configured to assign each one of said at least three alleys to one of three states, and to update the state of each one of said at least three alleys over time, wherein the three states are Inflow, Outflow and Freeflow, wherein for
   Inflow, the central control unit allows AGVs to enter, but not exit, via the junction into the alley;
   Outflow, the central control unit allows AGVs to exit, but not enter, via the junction; and
   Freeflow, if there is no AGV in the alley and the alley is not assigned to any of the other two states.

All embodiments and features of the system of the first aspect of the invention may be implemented in the method of the second aspect of the invention.

### Brief description of the drawings

Fig. 1 illustrates schematically a workspace in which embodiments of the present invention may be implemented.
Figs. 2-5 illustrate various layouts in a workspace in which entrance/exit nodes are used for solving conflicts that mary arise.
Figs. 6a-6g is a sequence illustrating how the AGV system controls a plurality of AGVs in order to avoid a potential conflict.
Fig. 7 is another illustration of how the AGV system controls a plurality of AGVs in order to avoid a potential conflict.

### Detailed description of the drawings

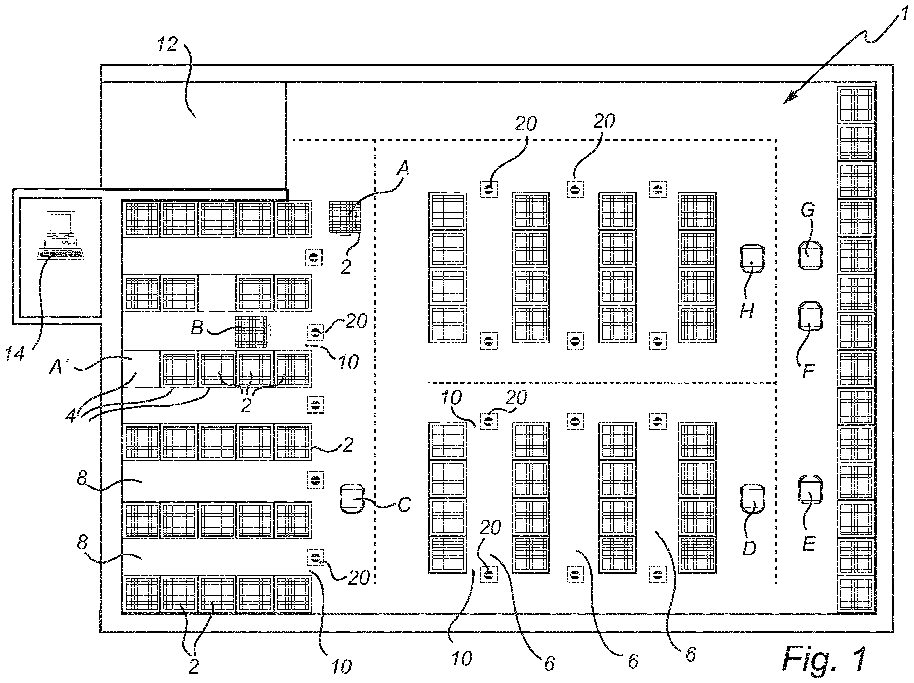

Fig. 1 illustrates schematically a workspace 1 in which embodiments of the present invention may be implemented.

The workspace 1 may, for instance, be located in a warehouse. On the floor of the wearhouse a plurality of AGVs (Automatic Guided Vehicles), illustrated with reference signs *A-H*, are configured to drive, for instance to pick up and deliver ordered items. Different types of items may be located in different racks or other types of inventory holders 2, which may or may not have designated loading/unloading positions 4.

Some areas of the workspace 1 may be delimited by rows of loading/unloading positions 4. Often most of the loading/unloading positions 4 will be occupied by an inventory holder 2, unless a particular inventory holder is currently being delivered to complete an order or being returned after having completed an order.

The loading/unloading positions 4 are commonly placed in rows , often parallel rows forming paths. Some paths are wide enough to allow two AGVs to pass each other (such as the path where AGVs *D-H* are located), while other paths are narrower, herein referred to as alleys 6, 8, in which two AGVs are not allowed to pass one another.

A plurality of the alleys 6 illustrated in Fig. 1 have two entrance/exits 10 for AGVs carrying a load. Those alleys 6 are referred to as tunnels. Another plurality of alleys 8 only have one entrance/exit 10 for AGVs carrying a load, and they are referred to as blind alleys.

The workspace 1 may have a delivery section 12 to which AGVs bring the inventory holder 2 for completing an order. The workspace 1 may, optionally, also have a parking area (not shown) reserved for AGVs which are not executing an order.

A central control unit 14 is provided for communicating with and controlling each individual AGV (e.g. via WLAN). Based on incoming orders and/or requests, the central control unit 14 plans the routes of each individual AGV. The central control unit 14 also controls the travel along the planned route, for instance, allowing the AGV to move forward along the planned route or temporarily stopping the AGV in order to avoid congestion or collision. The central control unit 14 may also re-plan a route for an AGV, be it to the same or to a different destination.

In Fig. 1, a first AGV *A* and a seond AGV *B* are illustrated as carrying a load, here in the form of an inventory holder 2. In the present application, when carrying a load, an AGV is defined as being in its first state. Other AGVs *C-H* in Fig. 1 are not carrying a load, and are defined as being in their second state.

In this example, the first AGV *A* is directed by the central control unit 14 to return the inventory holder 2 to its loading/unloading position. The first AGV *A* may, for instance, have completed a task, such as bringing the inventory holder 2 to the delivery section where an ordered item is retireved from the inventory holder 2. The loading/unloading position *A*' of this inventory holder is located in a blind alley 8. Currently, the second AGV *B* is also located in that alley 8, thus blocking the way if the first AGV *A* would be driven into the alley towards said loading/unloading position *A'*. If the second AGV *B* would have been in its second state, it could have been directed to simply move laterally out of the way underneath an inventory holder 2.

In order to avoid risk of conflicts and/or collisions in these kind of situations which may occur in alleys 6, 8, the AGV system has been provided with entrance/exit nodes 20 (for simplicity they are referred to as entrance/exit nodes, but since they control both entrance and exit of AGVs, one could also refer to them as entrance/exit nodes). More specifically, the central control unit 14 has access to a stored representation of the workspace. The representation may be stored in the central control unit 14 as such or in a separate unit, such as remotely, with which the central control unit 14 communicates.

The stored representation may comprise an orthogonal (X, Y) coordinate system, wherein each portion/position of the workspace may be represented by an X coordinate and a Y coordinate. In Fig. 1 a number of entrance/exit nodes 20 have been indicated with dashed-dotted lines in the workspace. It should be understood that the entrance/exit nodes 20 are not actually present in the physical workspace 1, but are instead present in the stored representation of the workspace. Nevertheless, for explanatory reasons, their virtual locations in the workspace 1 (corresponding to their X and Y coordinates in the stored representation) have been indicated in Fig. 1.

The entrance/exit nodes 20 are located in the coordinate system immediately outside the respective alley 6, 8. The stored representation may be divided into discrete portions and each discrete portion may, for instance, have a central point having specified X and Y coordinates. The central control unit 14 is suitably configured to command the AGVs to move from one discret portion to a neighbouring discrete portion. The entrance/exit nodes 20 are, therefore, suitably located at a discrete portion outside the alley 6, 8, but neighbouring a discrete portion inside the alley 6, 8.

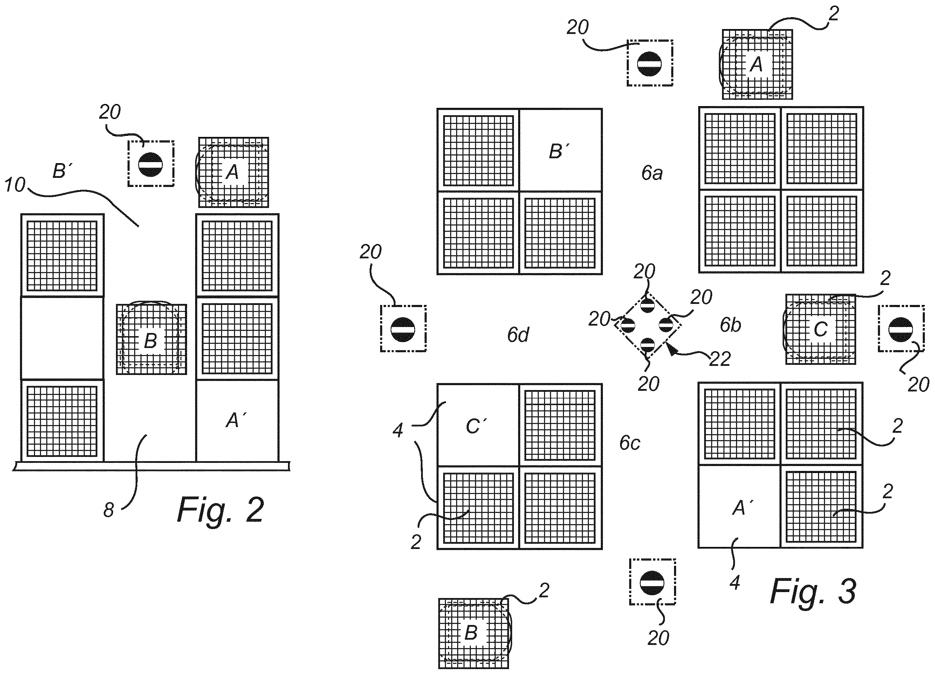

Figs. 2-5 illustrate various layouts in a workspace in which entrance/exit nodes are used for solving conflicts that mary arise.

Fig. 2 illustrates a similar situation as the one illustrated in Fig. 1.

In Fig. 2, a first AGV *A* is in its first state. Its destination is loading/unloading position *A'*, where the AGV *A* will unload the load which it is carrying. To be able to reach that position *A'* the first AGV *A* must enter the blind alley 8 through the only dedicated entrance 10 for AGVs travelling in their first state. When the first AGV *A* is at the discrete portion which neighbours the discrete portion which in the stored representation corresponds to X and Y coordinates having an entrance/exit node 20, the central control unit will determine that the first AGV *A* is in its first state and has its destination *A'* in the blind alley 8. The central control unit will also determine that a second AGV *B* is present in the alley and that it is in its first state and that it has its destination *B'* outside of the alley. The central control unit will stop the AGV *A* from moving forward along its planned route.

Thus, rather than as in the prior art, in which routes and conflicts are calculated in advance, including calculation and pre-planning of temporary idling of certain AGVs, the present invention allows for a much less complicated computational process to be carried out. The AGV system simply solves a conflict at the time when it detects that a conflict may arise. The entrance/exit node can be regarded as a conflict-checking point for alleys.

In terms of discrete time steps the first AGV *A* will be controlled to stand still for several time steps, until the second AGV *B* has exited the alley 8 and moved away from the entrance/exit node 20. Only then will the dicrete time step for the first AGV *A* be executed as moving to the entrance/exit node 20, and the next discrete time step will be moving into the alley 8.

Fig. 3 illustrates a four-way crossing with a three-way stand off. There are four alleys 6a-6d: a first allley 6a, a seocnd alley 6b, a third alley 6c and a fourth alley 6d. Each one of the three AGVs carries a load, i.e. they are in the first state. AGVs *A* is outside the first alley 6a, AGV *B* is outside the third alley 6c, while AGV *C* has already entered a second alley 6b. Each one of the AGVs *A, B* and *C* have destinations *A', B'* and *C*', at another alley than the one they are about to or have entered. At destinations *A'*, *B'* and *C'* the AGVs will unload their respective load, and then the AGVs will be considered to be in their second state. AGV *A* has its destination *A'* at the third alley 6c, AGV *B* has its destination *B'* in the first alley 6a, and AGV *C* has its destination *C'* in the fourth alley 6d. In this example the central control unit has determined that AGV *A* has the highest order of priority (highest rank), AGV *B* has the second highest order of priority, and AGV *C* has the lowest order of priority. Before the AGV *A* occupies the discrete portion associated with the entrance/exit node 20 at the first alley 6a, the central control unit will determine the current situation in the first alley. Since the first alley 6a is empty, the AGV *A* will in the next time step be allowed to occupy the discrete portion associated with the entrance/exit node 20 and then in the subsequent time step allows AGV *A* to enter the first alley 6a.

Turning back to Fig. 3, in a simliary manner, AGV *B* will be allowed to enter the third alley 6c, which is currently empty. The AGV *C* which is already in the second alley 6b will be the first one that arrives at the junction 22.

The junction 22 from which all four alleys extend is in the stored representation provided with four entrance/exit nodes 20, one for each alley. Since AGV *C* is the first one to arrive it will, despite having lowest order of priority, be allowed to occupy the junction 22 and then move into the fourth alley 6d towards its destination *C'*. In this case AGVs *A* and *B* might both arrive at the entrance/exit node at basically the same time. Since they need to switch alleys with each other, the control unit will activate a Standoff function, in which one of the free alleys (for instance alley 6b) will be used temporarily for accomodating one of AGVs *A* and *B*, allowing the other one of the AGVs to move into the alley where its destination is located.

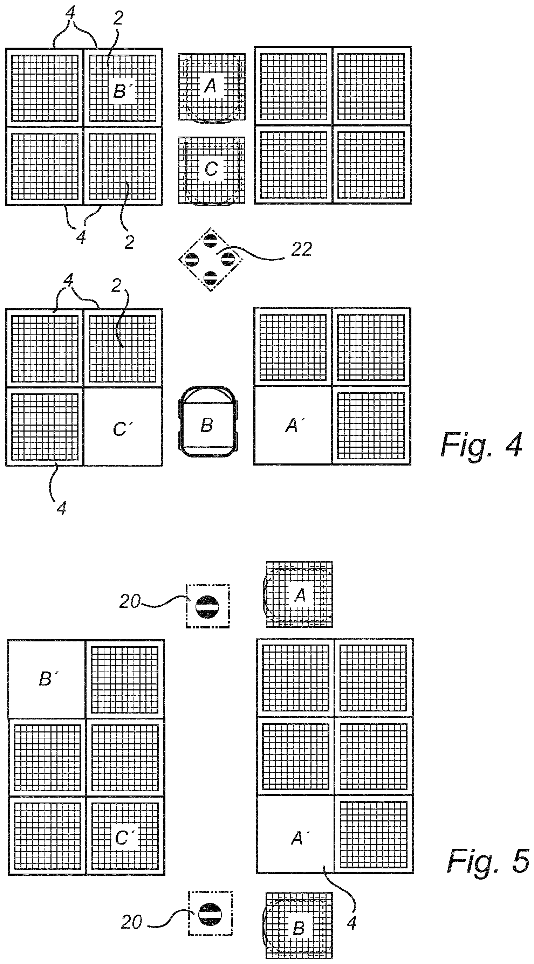

Fig. 4 illustrates a different situation in which both AGVs *A* and *C* have been allowed to enter the first alley since they are heading in the same direction, namely towards the junction 22 (and then towards the third alley). AGVs *A* and *C* carry loads, i.e. they are in their first state. AGV *B* does not carry a load, i.e. it is in its second state. Before AGV *C* is allowed to occupy the junction 22, the central control unit will based on the entrance/exit node associated with the third alley determine that AGV *B* is already present in the third alley, and that AGV *B* is in its second state. After another time step for each one of the AGVs, the AGV *C* will occupy the junction and AGV *B* will be one step closer to the junction. At this stage, when the conflict arises, the central control unit will command AGV *B* to move laterally to the loading/unloading positions 4 and continue move underneath the inventory holders 2 on its way to its destination *B'* where it will pick-up an inventory hoder 2. With AGV *B* being out of the way, AGVs *A* and *C* are allowed to continue into the third alley and reach their respective destination *A'* and *C*'.

Fig. 5 illustrates a situation in which AGV *A* and AGV *B* (both in their first state) are directed to enter an alley in the form of a tunnel from its two different entrances. The alley has two entrance/exit nodes 20. If AGV *A* has the highest order of priority, and both AGVs are only one time step from the resepctive entrance/exit node, then the central control unit will allow AGV *A* to enter and deliver the load to the loading/unloading position 4, destination *A'*. Meanwhile, during a number of time steps, AGV *B* will be temporarily stopped. When AGV *A* has reached its destination *A',* then AGV *B* will be allowed to pass the discrete portion associated with the entrance/exit node 20 and be allowed to pass through the alley and out through the opposite entrance of the alley in order to reach its destination *B'*.

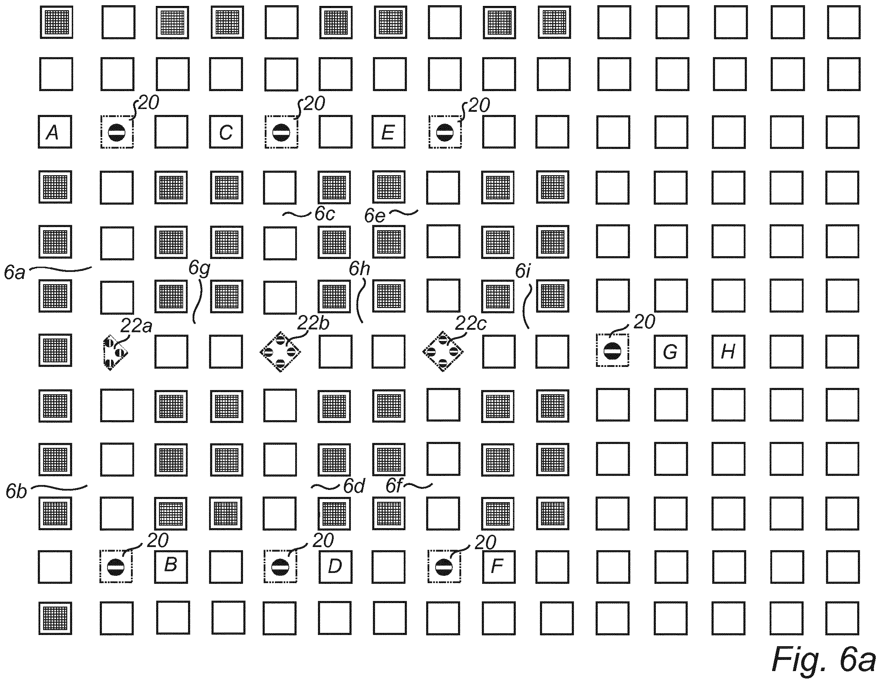

Figs. 6a-6f is a sequence illustrating how the AGV system controlls a plurality of AGVs *A-H* in order to avoid a potential conflict. The figures may be considered to correspond to a stored representation of a workspace.

In the following it is assumed that the central control unit has assigned a priority in alphabetical order, i.e. AGV *A* having the highest priority and AGV *H* having the lowest priority.

The stored representation of the workspace has a number of alleys 6a-6i and junctions 22a-22c. Each junction 22a-22c has a plurality of entrance/exit node (similarly to the junction 22 in Fig. 3). In addition to entrances at the junctions 22a-22c, there are also other entrances to the alleys provided with an entrance/exit node 20.

It is assumed that each one of AGVs *A-F* have a respective planned route which includes entering a respective alley and eventually arriving at the large open area of the workspace where AGVs *G* and *H* are currently located. AGVs *G* and *H* on the other hand are assumed to have their destinations to the left in the figures and therefore need to reach their respective destinations by passing along one or more of said alleys. Furthermore, in this example, it is assumed that each one of the AGVs *A-H* is in its first state, i.e. carrying a load and therefore not being able/allowed to move underneath the inventory holders that flank the alleys.

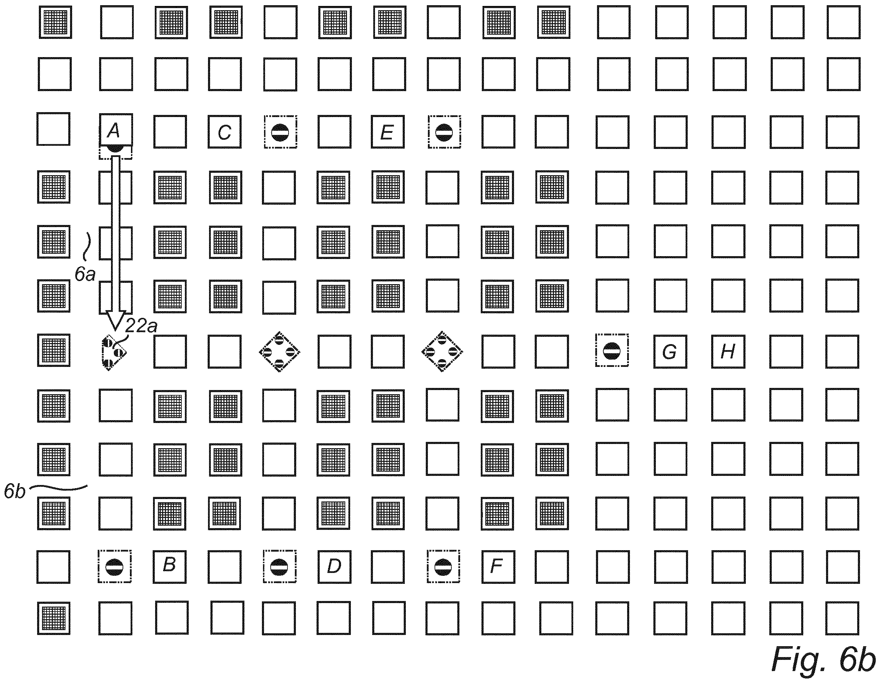

Starting with Fig. 6a, in the algorithm used by the central control unit, entrance to the alley 6a is requested for AGV *A*. Since the alley 6a is empty AGV *A* will be allowed to enter, which is illustrated in Fig. 6b by the AGV *A* occupying an entrance/exit node associated with alley 6a.

As illustrated in Fig. 6b, because the AGV *A* has been allowed to access the alley 6a, the alley will temporarily become a one-way path (i.e. unidirectional). This is illustrated by the arrow. At the other end of the alley 6a, there is a three-way junction 22a having three entrance/exit nodes, one for each alley 6a, 6b, 6g extending to the junction 22a. At the junction 22a, the entrance/exit node associated with alley 6a will only allow AGVs to move out from the alley 6a. Thus, no AGV will at present be allowed to enter alley 6a via the junction 22a. The central control unit has now assigned alley 6a to the state Outflow with respect to the entrance/exit node for alley 6a in junction 22a.

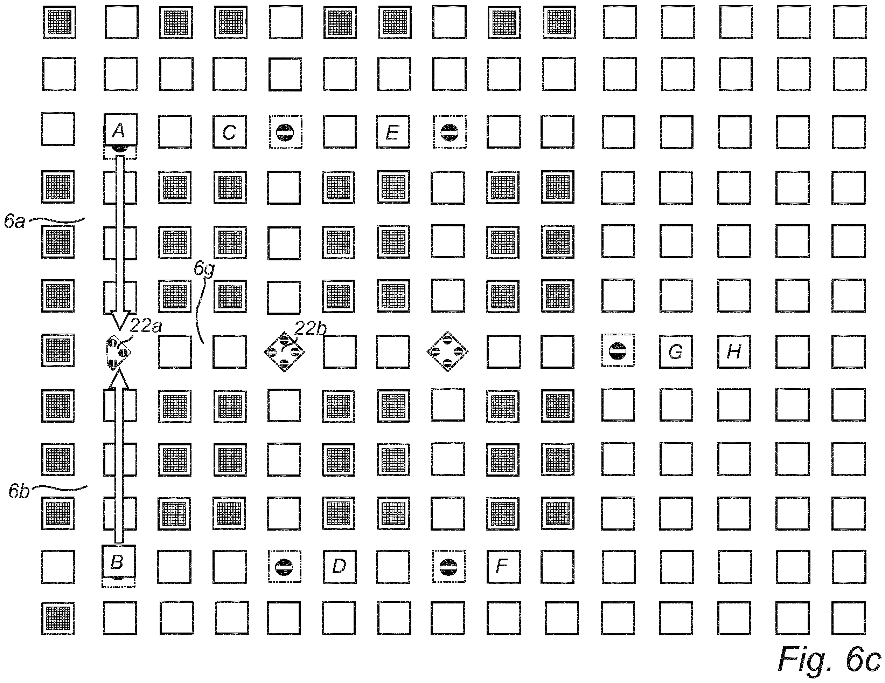

Next, in the algorithm used by the central control unit, entrance to the alley 6b is requested for AGV *B*. Since alley 6b is empty, AGV *B* is given access to alley 6b. Alley 6b will also be assigned the state Outflow, i.e. the central control unit allows AGVs to exit, but not to enter alley 6b via the junction 22a. This is illustrated with another arrow in Fig. 6c.

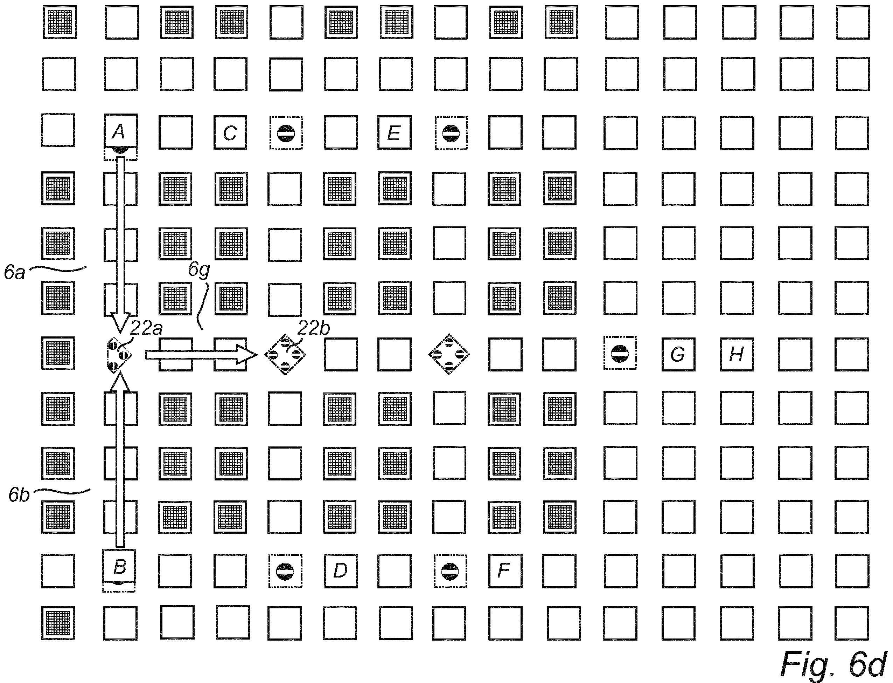

This will trigger the third node of junction 22a to "propagate" along the third alley 6g of the junction 22a. The propagation will extend all the way to the next junction 22b, i.e. at the other end of the alley 6g. This is illustrated in Fig. 6d. Thus, with respect to junction 22a, the alley 6g is assigned the state Inflow, contrary to the other alleys 6a, 6b of the junction 22a, which have already been assigned the state Outflow. This reduces the risk of conflict in the alleys 6a, 6b, 6g having the common junction 22a.

In the present case, junction 22a is shared by three alleys (N number of alleys), wherein if two of said alleys (N-1 number of said alleys) are assigned the state Outflow, then the remaining alley is assigned the state Inflow with respect to said junction 22a.

The propagation is illustrated in Fig. 6d with a third arrow between junction 22a and junction 22b. This means that while alley 6g is assigned the state Inflow with respect to junction 22a, it will be assigned the state Outflow with respect to junction 22b. This will prevent any AGV in its first state from entering alley 6g via the entrance at junction 22b.

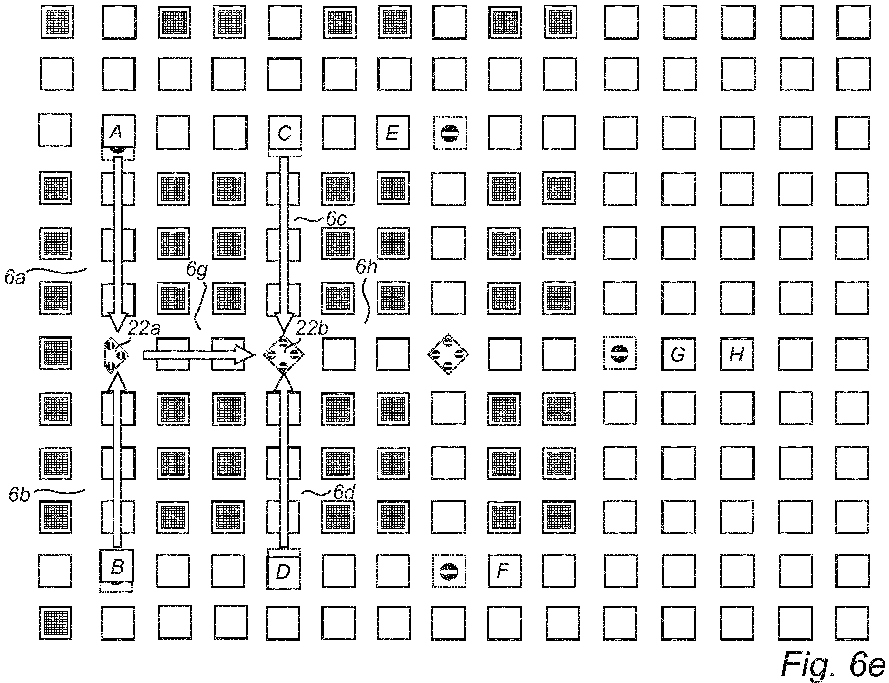

Next it is requested that AGV *C* and then AGV *D* enter alley 6c and alley 6d, respectively. Access will be allowed since these alleys are empty, and the alleys 6c and 6d will be assigned the stated Outflow with respect to junction 22b. This is illustrated in Fig. 6e.

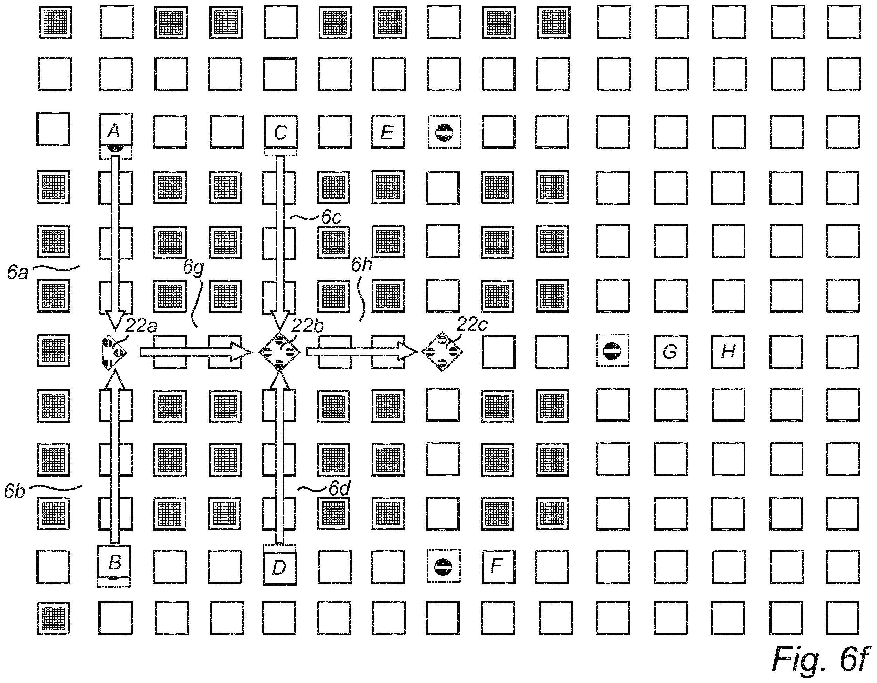

This will trigger the fourth node of junction 22b to "propagate" along the fourth alley 6h of the junction. The propagation will extend all the way to the next junction 22c, i.e. at the other end of the alley 6h. This is illustrated in Fig. 6f. Thus, with respect to junction 22b, the alley 6h is assigned the state Inflow, contrary to the other alleys 6c, 6d and 6g of the junction 22b, which have already been assigned the state Outflow. This reduces the risk of conflict in the alleys 6c, 6d, 6g having the common junction 22b.

Again, it follows the rule that if a junction is shared by N number of alleys, and N-1 number of said alleys have been assigned the state Outflow, then the remaining alley will be assigned the state Inflow with respect to said junction. In this case, junction 22b is shared by four alleys, and three of said alleys (N-1) are assigned the state Outflow, and therefore the remaining fourth alley is assigned the state Inflow with respect to said junction 22b.

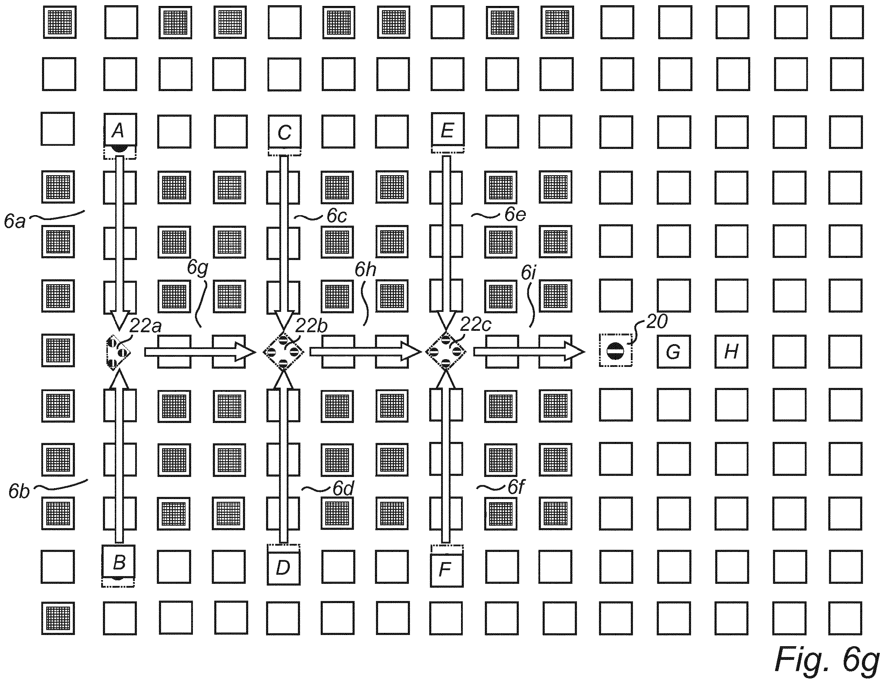

Fig. 6g illustrates similarly how AGVs *E* and *F* are subsequently allowed access to the alleys 6e and 6g respectively and how this causes (analogously with the previous explanation) the fourth entrance/exit node of junction 22c to propagate along alley 6i to the entrance/exit node 20. The alley 6i will be assigned the state Outflow with respect to entrance/exit node 20. As long as this state Outflow is maintained, AGVs *G* and *H* will not be allowed to enter into alley 6i via said entrance/exit node 20. The central control unit will therefore make AGVs *G* and *H* wait until after the other AGVs *A-F* have exited alley 6i. Alternatively, the central control unit may redirect AGVs *G* and *H* to enter via another alley and another entrance/exit node.

It should be noticed that if the order of priorities would have been the reverse, allowing AGVs *G* and *H* to enter alley 6i first, then the propagation would have been in the reverse direction, denying AGV *A* entry into alley 6a until the state Outflow has been changed to Freeflow or Inflow for alley 6a with respect to the entrance/exit node where AGV *A* is waiting.

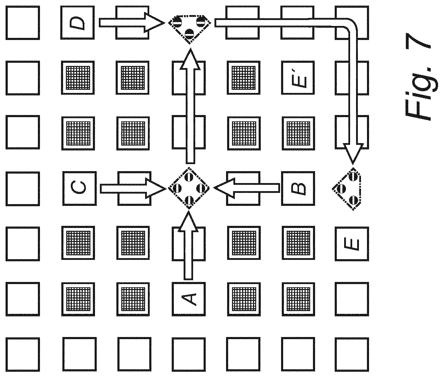

Fig. 7 is another illustration of how the AGV system controls a plurality of AGVs in order to avoid a potential conflict. A stored representation of a part of a workspace is illustrated.

Again it is assumed that all AGVs *A-E* carry a load. AGV *E* has its destination at loading/unloading position *E'*, where it will unload the load it carries. The order of priorities is alphabetical. Accordingly, AGV *E* has lowest priority. AGVs *A-C* have already entered a respective alley and are heading towards a four way junction. This will result in propagation along the fourth alley to a three way junction, towards which AGV *D* is alread heading. This in turn will result in continued propagation as illustrated by the bent arrow all the way to the junction outside which AGV *E* is waiting. AGV *E* will not be allowed access to the propaged alley since it would be heading against the direction of the propagation. Thus, it the central control unit will keep AGV *E* waiting until the propagation has been removed.

It should be noted that if one of the AGVs *A*-*D* would not be in an alley (e.g. assuming that AGV *C* would not be present in the figure) then there would be no propagation and AGV *E* would be allowed entry into its alley. Put differently, if a junction is shared by N number of alleys and only N-2 number of said alleys have been assigned the state Outflow (instead of N-1), then the remaining two alleys maintain the default state Freeflow, i.e. no propagation is made.

## Claims

1. An AGV system comprising
- a plurality of AGVs (A-H), wherein each AGV has a first state in which it carries a load, and a second state in which it is free from carrying a load,
- a workspace (1), such as a warehouse, in which said plurality of AGVs (A-H) are configured to operate, the workspace (1) comprising at least one alley (6; 6a-i; 8) in which any two of said plurality of AGVs (A-H) are not allowed to pass each other, wherein said alley (6; 6a-i; 8) has one or two entrances (10) for any AGV (A-H) travelling in said workspace while being in its first state and having a planned route into said alley,
- a central control unit (14) having access to a stored representation of the workspace (1), wherein in the stored representation of the workspace an entrance/exit node (20) is located immediately outside a respective entrance (10), wherein the central control unit (14) is configured to plan the routes of and communicating with said plurality of AGVs (A-H), wherein the control unit (14) is configured to monitor the position and state of any one of said plurality of AGVs (A-H) that is present in the alley (6; 6a-i; 8),wherein before a first AGV, which is located externally of the alley and has a planned route into said alley, is allowed to occupy a portion of the workspace that corresponds to one of said entrance/exit nodes (20) in the stored representation of the workspace (1), the control unit is configured to determine
- if said first AGV (A-H) is in its first or second state, and
- if any other AGV (A-H) is present in the alley (6; 6a-i; 8) and would interfere with said planned route of said first AGV, wherein the control unit (14) is configured to direct said first AGV into the alley via said portion of the workspace upon determination by the control unit that there would be no interference with the planned route;
wherein said at least one alley (6; 6a-i; 8) includes at least three alleys which are interconnected at a junction (22), wherein each one of said at least three alleys is assigned to a respective individual entrance/exit node (20), wherein in the stored representation of the workspace each one of said individual entrance/exit nodes is located in said junction,
**characterized in that** said central control unit (14) is configured to assign each one of said at least three alleys to one of three states, and to update the state of each one of said at least three alleys over time, wherein the three states are Inflow, Outflow and Freeflow, wherein for
Inflow, the central control unit is configured to allow AGVs to enter, but not exit, via the junction into the alley;
Outflow, the central control unit is configured to allow AGVs to exit, but not enter, via the junction from the alley; and
Freeflow, if there is no AGV in the alley and the alley is not assigned to any of the other two states.

2. The AGV system as claimed in claim 1, wherein said stored representation of the workspace (1) is divided into discrete portions, wherein a planned route travelled by any one of said plurality of AGVs (A-H) is represented by the AGV passing from a discrete portion currently occupied by the AGV to the next discrete portion along the planned route, and repeatingly passing to the following discrete portion along the planned route until the end of the planned route has been reached, wherein said entrance/exit node (22) is located at the last discrete portion that an AGV being in its first state occupies before moving to a discrete portion inside the alley (6; 6a-i; 8).

3. The AGV system as claimed in claim 2, wherein, before any one of said plurality of AGVs (A-H) performs a movement from the discrete portion currently occupied by that AGV to the next discrete portion along the planned route, the central control unit (14) determines if that AGV is allowed to make that movement.

4. The AGV system as claimed in any one of claims 1-3, wherein said central control unit (14) assigns a respective order of priority to each one of said plurality of AGVs (A-H), wherein said central control unit determines if an AGV having a higher order of priority is allowed to move before it determines if an AGV having a lower order of priority is allowed to move.

5. The AGV system as claimed in any one of claims 1-4, wherein said alley is a blind alley (8), having only one entrance for AGVs being in the first state.

6. The AGV system as claimed in any one of claims 1-4, wherein said alley is a tunnel having two entrances, one at each end of the alley, for AGVs being in the first state, wherein immediately outside each entrance (10) there is located a respective entrance/exit node (20).

7. The AGV system as claimed in any one of the preceding claims, wherein each one of said individual entrance/exit nodes (20) is provided at a first end of a respective one of said at least three alleys, wherein each one of said at least three alleys have a second end, wherein a respective further entrance/exit node (20) is located at each one of said second ends.

8. The AGV system as claimed in any one of the preceding claims, wherein said junction (20) is shared by N number of alleys (6; 6a-i; 8), wherein if N-1 number of said alleys are assigned the state Outflow, then the remaining alley is assigned the state Inflow with respect to said junction (20).

9. The AGV system as claimed in any one of the preceding claims, wherein, if two or more of said plurality of AGVs (A-H) are to be directed into said at least three alleys, then if both or all of said two or more AGVs (A-H) are one discrete portion from entering an alley, the central control unit (14) directs the AGV that has the highest order of priority into the alley first.

10. A method of controlling an AGV system comprising a plurality of AGVs (A-H) which operate in a workspace (1), such as a warehouse, the workspace comprising at least one alley (6; 6a-i; 8) in which any two of said plurality of AGVs (A-H) are not allowed to pass each other, wherein said alley has one or two entrances (10) for any AGV travelling in said workspace while carrying a load and having a planned route into said alley, the method comprising:
assigning any AGV (A-H) which carries a load as being in a first state, and assigning any AGV which is free from carrying a load as being in a second state,
providing a representation of the workspace (1),
storing the representation of the workspace in a central control unit (14) or a separate unit to which the central control unit has access,
providing in the stored representation an entrance/exit node (20) located immediately outside a respective entrance,
planning the routes of and communicating with said plurality of AGVs (A-H) by means of the central control unit (14),
monitoring, by means of the central control unit (14), the position and state of any one of said plurality of AGVs (A-H) that is present in the alley,
determining, before a first AGV, which is located externally of the alley and has a planned route into said alley, is allowed to occupy a portion of the workspace that corresponds to one of said entrance/exit nodes (20) in the stored representation of the workspace, by means of the central control unit (14)
- if said first AGV is in its first or second state, and
- if any other AGV is present in the alley and would interfere with said planned route of said first AGV,
directing, by means of said central control unit (14), said first AGV (AH) into the alley via said portion of the workspace upon determination that there would be no interference with the planned route;
wherein said at least one alley (6; 6a-i; 8) includes at least three alleys which are interconnected at a junction (22), wherein each one of said at least three alleys is assigned to a respective individual entrance/exit node (20), wherein in the stored representation of the workspace each one of said individual entrance/exit nodes is located in said junction,
**characterized in that** said central control unit (14) is configured to assign each one of said at least three alleys to one of three states, and to update the state of each one of said at least three alleys over time, wherein the three states are Inflow, Outflow and Freeflow, wherein for
Inflow, the central control unit allows AGVs to enter, but not exit, via the junction into the alley;
Outflow, the central control unit allows AGVs to exit, but not enter, via the junction from the alley; and
Freeflow, if there is no AGV in the alley and the alley is not assigned to any of the other two states.

11. The method of claim 10, wherein the AGV system is an AGV system according to any one of claims 1-9.

## Patentansprüche

1. Ein AGV-System umfassend
- eine Mehrzahl von AGV (A-H), wobei jedes AGV einen ersten Zustand hat, in dem es eine Last trägt und einen zweiten Zustand, in dem es frei von einer Last ist,
- einen Arbeitsbereich (1), wie beispielsweise ein Lagerhaus, in dem die Mehrzahl von AGV (A-H) konfiguriert sind zum Arbeiten, wobei der Arbeitsbereich (1) mindestens eine Gasse (6; 6a-i; 8) umfasst, in denen zwei der Mehrzahl von AGVs (A-H) sich nicht gegenseitig passieren dürfen, wobei die Gasse (6; 6a-i; 8) einen oder zwei Eingänge (10) für jedes AGV (A-H) hat, das in dem Arbeitsbereich fährt, während der Arbeitsbereich sich in seinem ersten Zustand befindet und eine geplante Route in der Gasse hat,
- eine zentrale Steuereinheit (14), die Zugang zu einer gespeicherten Darstellung von den Arbeitsbereich (1) hat, wobei sich in der gespeicherten Darstellung des Arbeitsbereichs, unmittelbar außerhalb eines jeweiligen Eingangs (10), ein Eingangs-/ Ausgangsknoten (20) befindet, wobei die zentrale Steuereinheit (14) konfiguriert ist, um die Routen der Mehrzahl an AGV zu planen und mit diesen zu kommunizieren, wobei die zentrale Steuereinheit (14) konfiguriert ist, um die Position und Zustand eines jeden der mehreren AGV (A-H), die sich in der Gasse (6; 6a-i; 8) befinden, zu überwachen, wobei, bevor einem ersten AGV, das sich außerhalb der Gasse befindet und eine geplante Route in diese Gasse hat, erlaubt ist einen Teil des Arbeitsbereichs, der einem der genannten Eingangs- / Ausgangsknoten (20) in der gespeicherten Darstellung des Arbeitsbereichs (1), entspricht, zu belegen, die Steuereinheit konfiguriert ist, um zu bestimmen
- ob sich das erste AGV (A-H) in seinem ersten oder zweiten Zustand befindet, und
- ob sich ein anderes AGV (A-H) in der Gasse befindet (6; 6a-i; 8) das die geplante Route des ersten AGV stören würde, wobei die zentrale Steuereinheit (14) konfiguriert ist, um das erste AGV über diesen Teil des Arbeitsbereichs in die Gasse zu leiten, nach Feststellung durch die Steuereinheit, dass es keine Störung der geplanten Route geben wird;
wobei die mindestens eine Gasse (6; 6a-i; 8) mindestens drei Gassen umfasst, die an einer Verbindungsstelle (22) miteinander verbunden sind, wobei jede der mindestens drei Gassen einem jeweiligen individuellen Eingangs- / Ausgangsknoten (20) zugeordnet ist wobei in der gespeicherten Darstellung des Arbeitsbereichs jeder der einzelnen Eingangs- / Ausgangsknoten sich in der Verbindungsstelle befindet,
**dadurch gekennzeichnet, dass** die zentrale Steuereinheit (14) konfiguriert ist, um jeder der mindestens drei Gassen einen von drei Zuständen zuzuordnen, und den Zustand jeder der mindestens drei Gassen im Laufe der Zeit zu aktualisieren,
wobei die drei Zustände Zufluss, Abfluss und Freifluss sind, wobei für Zufluss, die zentrale Steuereinheit so konfiguriert ist, dass sie zulässt, dass AGVs über die Verbindungsstelle in die Gasse einfahren aber nicht ausfahren können,
Abfluss, die zentrale Steuereinheit so konfiguriert ist, dass sie zulässt, dass AGVs über die Verbindungsstelle aus der Gasse ausfahren aber nicht einfahren können,
Freifluss, wenn sich kein AGV in der Gasse befindet und die Gasse nicht einem der beiden anderen Zustände zugeordnet ist.

2. AGV-System nach Anspruch 1, wobei die gespeicherte Darstellung des Arbeitsbereichs (1) in einzelne Teile unterteilt ist, wobei eine geplante Route von einem der Mehrzahl von AGVs (A-H) zurückgelegt wird, durch das AGV, das von einem diskreten Abschnitt, der gegenwärtig vom AGV besetzt ist, zum nächsten diskreten Abschnitt entlang der geplanten Route übergeht, dargestellt wird, und wiederholt in die folgenden diskreten Abschnitte entlang der geplanten Route übergeht, bis das Ende der geplanten Route erreicht wird, wobei sich der Eingangs- / Ausgangsknoten (22) am letzten diskreten Abschnitt befindet, das ein AGV, das sich in seinem ersten Zustand befindet, einnimmt, bevor es sich zu einem diskreten Teil innerhalb der Gasse bewegt (6; 6a-i; 8).

3. AGV-System nach Anspruch 2, wobei, bevor eines der Mehrzahl von AGV (A-H) eine Bewegung von dem diskreten Abschnitt, der gegenwärtig von diesem AGV belegt ist, zum nächsten diskreten Abschnitt entlang der geplanten Route ausführt, die zentrale Steuereinheit (14) bestimmt, ob das AGV diese Bewegung ausführen darf.

4. AGV-System nach einem der Ansprüche 1 bis 3, wobei die zentrale Steuereinheit (14) jedem der Mehrzal an AGVs (A-H) eine jeweilige Prioritätsreihenfolge zuweist, wobei die zentrale Steuereinheit bestimmt, ob sich ein AGV mit einer höheren Prioritätsordnung bewegen darf, bevor es bestimmt, ob sich ein AGV mit einer niedrigeren Prioritätsordnung bewegen darf.

5. AGV-System nach einem der Ansprüche 1 bis 4, wobei die Gasse eine Sackgasse (8) ist, mit nur einem Eingang für AGV im ersten Zustand.

6. AGV-System nach einem der Ansprüche 1 bis 4, wobei die Gasse ein Tunnel mit zwei Eingängen ist, einer an jedem Ende der Gasse, für AGV die sich im ersten Zustand befinden, wobei sich unmittelbar außerhalb jedes Eingangs (10) ein entsprechender Eingangs- / Ausgangsknoten (20) befindet.

7. AGV-System, nach einem der vorhergehenden Ansprüche, wobei jeder der einzelnen Eingangs- / Ausgangsknoten (20) an einem ersten Ende der jeweiligen der mindestens drei Gassen vorgesehen ist; wobei jede der mindestens drei Gassen ein zweites Ende hat, wobei sich an jedem der zweiten Enden jeweils ein weiterer Ein- / Ausgangsknoten (20) befindet

8. AGV-System, nach einem der vorhergehenden Ansprüche, wobei die Verbindungsstelle (20) von N Gassen (6; 6a-i; 8) geteilt wird, wobei, wenn N-1 der Gassen der Zustand Abfluss zugewiesen wird, dann wird der verbleibenden Gasse der Zustand Zufluss in Bezug auf besagte Verbindungsstelle (20) zugewiesen.

9. AGV-System, nach einem der vorhergehenden Ansprüche, wobei, wenn zwei oder mehr der Mehrzahl von AGVs (A-H) in die mindestens drei Gassen geführt werden sollen, dann, falls beide oder alle der zwei oder mehr AGV (A-H) ein diskreter Teil vom Einfahren in eine Gasse sind, dann weist die zentrale Steuereinheit (14) das AGV, das die höchste Priorität hat, zuerst in die Gasse ein.

10. Verfahren zum Steuern eines AGV-Systems, das eine Mehrzahl von AGV (A-H) umfasst, die in einem Arbeitsbereich (1), wie einem Lager arbeiten, wobei der Arbeitsbereich mindestens eine Gasse (6; 6a-i; 8) umfasst, in der zwei beliebige von der Mehrzahl von AGVs (A-H) sich nicht gegenseitig passieren dürfen, wobei die Gasse einen oder zwei Eingänge (10) für jedes AGV hat, das in dem Arbeitsbereich fährt, während eine Last getragen wird und ein eine geplante Route in der Gasse vorliegt, wobei das Verfahren umfasst:
Zuweisen eines beliebigen AGV (A-H), das eine Last trägt, einen ersten Zustand und Zuweisen eines AGV, das frei von einer Last ist, einen zweiten Zustand,
Bereitstellung einer Darstellung des Arbeitsbereichs (1),
Speichern der Darstellung des Arbeitsbereichs in einer zentralen Steuereinheit (14) oder einer separaten Einheit, zu der die zentrale Steuereinheit Zugang hat,
Bereitstellen eines Eingangs- / Ausgangsknotens (20) in der gespeicherten Darstellung der sich unmittelbar ausserhalb eines entsprechenden Eingangs befindet,
Planen der Routen und Kommunikation mit der Mehrzahl von AGVs (A-H) mittels der zentralen Steuereinheit (14),
mittels der zentralen Steuereinheit (14), Überwachung der Position und Zustand eines jeden der Mehrzahl von AGVs (A-H), die in der Gasse vorhanden sind,
Bestimmen mittels der zentralen Steuereinheit (14), bevor eine erstes AGV, das sich außerhalb der Gasse befindet und eine geplante Route in die Gasse hat, einen Abschnitt des Arbeitsbereichs, der einem Eingangs- / Ausgangsknotens (20) in der gespeicherten Darstellung des Arbeitsbereichs entspricht, besetzen darf,
- ob sich das erste AGV (A-H) in seinem ersten oder zweiten Zustand befindet, und
- ob sich ein anderes AGV (A-H) in der Gasse befindet das die geplante Route des ersten AGV stören würde,
mittels der zentralen Steuereinheit (14), Lenken des ersten AGV (A-H)
in die Gasse über den Abschnitt des Arbeitsbereichs nach Feststellung, dass
es keine Störung der geplanten Route geben würde;
wobei die mindestens eine Gasse (6; 6a-i; 8) mindestens drei Gassen umfasst, die an einer Verbindungsstelle (22) miteinander verbunden sind, wobei jede der mindestens drei Gassen einem jeweiligen individuellen Eingangs- / Ausgangsknoten (20) zugeordnet ist wobei in der gespeicherten Darstellung des Arbeitsbereichs jeder der einzelnen Eingangs- / Ausgangsknoten sich in der Verbindungsstelle befindet,
**dadurch gekennzeichnet, dass** die zentrale Steuereinheit (14) konfiguriert ist, um jeder der mindestens drei Gassen einen von drei Zuständen zuzuordnen, und den Zustand jeder der mindestens drei Gassen im Laufe der Zeit zu aktualisieren,
wobei die drei Zustände Zufluss, Abfluss und Freifluss sind, wobei für
Zufluss, die zentrale Steuereinheit so konfiguriert ist, dass sie zulässt, dass AGVs über die Verbindungsstelle in die Gasse einfahren aber nicht ausfahren können,
Abfluss, die zentrale Steuereinheit so konfiguriert ist, dass sie zulässt, dass AGVs über die Verbindungsstelle aus der Gasse ausfahren aber nicht einfahren können,
Freifluss, wenn sich kein AGV in der Gasse befindet und die Gasse nicht einem der beiden anderen Zustände zugeordnet ist.

11. Verfahren nach Anspruch 10, wobei das AGV-System ein AGV-System ist gemäß einem der Ansprüche 1-9.

## Revendications

1. Système de VGA comprenant
- une pluralité de VGAs (A-H), dans laquelle chaque VGA a un premier état dans lequel il porte une charge, et un second état dans lequel il ne porte pas une charge,
- un espace de travail (1), tel qu'un entrepôt, dans lequel ladite pluralité de VGAs (AH) est configurée de manière à fonctionner, l'espace de travail (1) comprenant au moins une allée (6; 6a-i; 8) dans laquelle quelconque deux parmi ladite pluralité de VGAs (AH) ne sont pas autorisés à se croiser, dans lequel ladite allée (6; 6a-i; 8) a une ou deux entrées (10) pour tout VGA (AH) se déplaçant dans ledit espace de travail tout en étant dans son premier état et ayant un itinéraire planifié dans ladite allée,
- une unité de commande centrale (14) ayant accès à une représentation stockée de l'espace de travail (1), dans lequel dans la représentation stockée de l'espace de travail un nœud d'entrée/sortie (20) est positionné immédiatement à l'extérieur d'une entrée respective (10), dans lequel l'unité de commande central (14) est configurée de manière à planifier les itinéraires et communiquer avec ladite pluralité de VGAs (AH), dans lequel l'unité de commande (14) est configurée de manière à surveiller la position et l'état de l'un quelconque de ladite pluralité de VGAs (AH) qui est présent dans l'allée (6; 6a-i; 8), dans lequel avant qu'un premier VGA, qui est situé à l'extérieur de l'allée et a un itinéraire planifié dans ladite allée, soit autorisé à occuper une partie de l'espace de travail qui correspond à l'un desdits nœuds d'entrée/sortie (20) dans la représentation stockée de l'espace de travail (1), l'unité de commande est configurée de manière à déterminer
- si ledit premier VGA (A-H) est dans son premier ou second état, et
- si n'importe quel autre VGA (AH) est présent dans l'allée (6; 6a-i; 8) et interférerait avec ledit itinéraire planifié dudit premier VGA, l'unité de commande (14) est configurée de manière à diriger ledit premier VGA dans l'allée via ladite partie de l'espace de travail sur détermination par l'unité de contrôle qu'il n'y aurait pas d'interférence avec l'itinéraire prévu;
dans lequel ladite au moins une allée (6; 6a-i; 8) comprend au moins trois allées qui sont interconnectées à une jonction (22), dans lequel chacune desdites au moins trois allées est affectée à un nœud d'entrée/sortie individuel respectif (20), dans lequel, dans la représentation stockée de l'espace de travail, chacun desdits nœuds d'entrée/sortie individuels est situé dans ladite jonction,
**caractérisé en ce que** ladite unité de commande centrale (14) est configurée de manière à affecter chacune desdites au moins trois allées à l'un de trois états, et de manière à mettre à jour l'état de chacune desdites au moins trois allées au fil du temps, dans lequel les trois états sont flux entrant, flux sortant et flux libre, dans lequel pour le
flux entrant, l'unité de commande centrale est configurée de manière à autoriser les VGAs à entrer, mais pas à sortir, via la jonction dans l'allée ;
flux sortant, l'unité de commande centrale est configurée de manière à autoriser les VGAs à sortir, mais pas à entrer, via la jonction à partir de l'allée ; and
flux libre, s'il n'y a pas de VGAs dans l'allée et que l'allée n'est affectée à aucun des deux autres états.

2. Système VGA selon la revendication 1, dans lequel ladite représentation stockée de l'espace de travail (1) est divisée en parties discrètes, dans lequel un itinéraire planifié parcouru par l'un quelconque de ladite pluralité de VGAs (AH) est représenté par le VGA passant d'une partie discrète actuellement occupée par le VGA à la partie discrète suivante le long de l'itinéraire planifié, et passant de manière répétée à la partie discrète suivante le long de l'itinéraire planifié jusqu'à ce que la fin de l'itinéraire planifié ait été atteinte, dans lequel ledit nœud d'entrée/sortie (22) est situé à la dernière partie discrète qu'un VGA étant dans son premier état occupe avant de passer à une partie discrète à l'intérieur de l'allée (6; 6a-i; 8).

3. Système VGA selon la revendication 2, dans lequel, avant que l'un quelconque de ladite pluralité de VGAs (AH) effectue un mouvement de la partie discrète actuellement occupée par ce VGA à la partie discrète suivante le long de l'itinéraire planifié, l'unité de commande centrale (14) détermine si ce VGA est autorisé à effectuer ce mouvement.

4. Système VGA selon l'une quelconque des revendications 1 à 3, dans lequel ladite unité de commande centrale (14) attribue un ordre de priorité respectif à chacun de ladite pluralité de VGAs (AH), dans lequel ladite unité de commande centrale détermine si un VGA ayant un ordre de priorité plus élevé est autorisé à se déplacer avant qu'elle détermine si un le VGA ayant un ordre de priorité inférieur est autorisé à se déplacer.

5. Système VGA selon l'une quelconque des revendications 1 à 4, dans lequel ladite allée est une impasse (8), n'ayant qu'une seule entrée pour les VGAs étant dans le premier état.

6. Système VGA selon l'une quelconque des revendications 1 à 4, dans lequel ladite allée est un tunnel ayant deux entrées, une à chaque extrémité de l'allée, pour les VGAs étant dans le premier état, dans lequel immédiatement à l'extérieur de chaque entrée (10) est situé un nœud d'entrée/sortie respectif (20).

7. Système VGA selon l'une quelconque des revendications précédentes, dans lequel chacun desdits nœuds individuels d'entrée/sortie (20) est prévu à une première extrémité d'une desdites au moins trois allées respective, dans lequel chacune desdites au moins trois allées a une seconde extrémité, dans lequel un autre nœud d'entrée/sortie respectif (20) est situé à chacune desdites secondes extrémités.

8. Système VGA selon l'une quelconque des revendications précédentes, dans lequel ladite jonction (20) est partagée par N nombre d'allées (6; 6a-i; 8), dans lequel si N-1 nombre desdites allées se voit attribuer l'état flux de sortie, alors l'allée restante se voit attribuer l'état flux d'entré par rapport à ladite jonction (20).

9. Système VGA selon l'une quelconque des revendications précédentes, dans lequel, si deux ou plusieurs de ladite pluralité de VGAs (AH) doivent être dirigés dans lesdites au moins trois allées, alors si les deux ou tous lesdits deux ou plusieurs VGAs (AH) sont à une partie discrète d'entrer dans une allée, la centrale l'unité de commande (14) dirige le VGA qui a l'ordre de priorité le plus élevé dans l'allée en premier.

10. Procédé de control d'un système de VGA comprenant une pluralité de VGAs (A-H) qui opèrent dans un espace de travail (1), tel qu'un entrepôt, l'espace de travail comprenant au moins une allée (6; 6ai; 8) dans laquelle quelconque deux parmi ladite pluralité de VGAs (AH) ne sont pas autorisés à se croiser, dans lequel ladite allée a une ou deux entrées (10) pour tout VGA (AH) se déplaçant dans ledit espace de travail tout en portant une charge et ayant un itinéraire planifié dans ladite allée, le procédé comprenant :
affecter tout VGA (A-H) qui porte une charge comme étant dans un premier état, et affecter tout VGA qui ne porter pas une charge comme étant dans un second état,
fournir une représentation de l'espace de travail (1),
stocker la représentation de l'espace de travail dans une unité de commande centrale (14) ou dans une unité séparée à laquelle l'unité de commande centrale a accès,
fournir dans la représentation stockée un nœud d'entrée/sortie (20) situé immédiatement à l'extérieur d'une entrée respective,
planifier les itinéraires et communiquer avec ladite pluralité de VGAs (A-H) au moyen de l'unité centrale de commande (14),
surveiller, au moyen de l'unité de commande centrale (14), la position et l'état de l'un quelconque de ladite pluralité de VGAs (AH) qui est présent dans l'allée,
déterminer, avant qu'un premier VGA, qui est situé à l'extérieur de l'allée et a un itinéraire planifié dans ladite allée, soit autorisé à occuper une partie de l'espace de travail qui correspond à l'un desdits nœuds d'entrée/sortie (20) dans la représentation stockée de l'espace de travail, au moyen de l'unité centrale de commande (14)
- si ledit premier VGA est dans son premier ou second état, et
- si n'importe quel autre VGA (AH) est présent dans l'allée et interférerait avec ledit itinéraire planifié dudit premier VGA,
diriger, par moyen de ladite l'unité de commande (14) ledit premier VGA dans l'allée via ladite partie de l'espace de travail sur détermination qu'il n'y aurait pas d'interférence avec l'itinéraire prévu;
dans lequel ladite au moins une allée (6; 6a-i; 8) comprend au moins trois allées qui sont interconnectées à une jonction (22), dans lequel chacune desdites au moins trois allées est affectée à un nœud d'entrée/sortie individuel respectif (20), dans lequel, dans la représentation stockée de l'espace de travail, chacun desdits nœuds d'entrée/sortie individuels est situé dans ladite jonction,
**caractérisé en ce que** ladite unité de commande centrale (14) est configurée de manière à affecter chacune desdites au moins trois allées à l'un de trois états, et de manière à mettre à jour l'état de chacune desdites au moins trois allées au fil du temps, dans lequel les trois états sont flux entrant, flux sortant et flux libre, dans lequel pour le
flux entrant, l'unité de commande centrale est configurée de manière à autoriser les VGAs à entrer, mais pas à sortir, via la jonction dans l'allée ;
flux sortant, l'unité de commande centrale est configurée de manière à autoriser les VGAs à sortir, mais pas à entrer, via la jonction à partir de l'allée ; and
flux libre, s'il n'y a pas de VGAs dans l'allée et que l'allée n'est affectée à aucun des deux autres états.

11. Procédé selon la revendication 11, dans lequel le système VGA est un système VGA selon l'une quelconque des revendications 1 à 9.
